# EUROPEAN PATENT APPLICATION

(11) **EP 2 728 465 A1**
(43) Date of publication of application: **07.05.2014**
(21) Application number: 13156146.6
(22) Date of filing: 21.02.2013
(51) Int. Cl.: G06F 9/44

(54) **System and method for assessing product maturity**

(30) Priority: 01.11.2012 IN MU31732012
(71) Applicant: Tata Consultancy Services Limited, Maharashtra (IN)
(72) Inventor: Cherusseri, Suresh, 400 076 MAHARASHTRA (IN); Panda, Manoranjan, 751 024 ORISSA (IN); Anjan, Gururaj, 751 024 ORISSA (IN)
(74) Representative: Brann AB

(57) **Abstract**

A method and system to evaluate maturity level of a software product is provided wherein the evaluation is based on four maturity levels, the maturity levels being Basic, Established, Differentiated, and Leadership in dimensions of key focus areas namely Product planning, Technology Tools & Methodology, Product Code & Quality, Release & Configuration Management, Usability, Security & Supply chain, and Intellectual Property Rights, and competency areas of Process, Infrastructure, Architecture, and People. A checklist having plurality of conformance requirements is provided at each maturity level for each key focus area to assess the maturity level of the software product.

## Description

### FIELD OF THE INVENTION

The present invention relates generally to a method and system for evaluating maturity level of a software product. More specifically, the present invention relates to assessment of maturity level of a software product based on four maturity levels, seven key focus areas, and aligned with four competency areas.

### DESCRIPTION OF THE RELATED ART

Product development within stipulated time, cost and quality has always posed a formidable challenge for the software industry. Several development methodologies along with automated tools are being used to engineer the product, also essential for the team is to follow a discipline method supported by processes, guide to architecture centric development, and adoption of product line approach, mindset for interoperable product, infrastructure and right People to engineer the product. Several methods have come up with automated tools to assess maturity level of a software product; however no known assessment methods and system teaches an approach that is supported and focused on key competency areas that include Process, Architecture, Infrastructure and People. Further, no such evaluation model is known to exist in the art that teaches assessment of software maturity based on a defined degree of maturity levels and key focus areas.

In view of the aforementioned limitation of the prior art, it would be desirable to have a system to assess maturity level of a software product based on most appropriate maturity levels, key focus areas and key competency areas.

### SUMMARY OF THE INVENTION

Embodiments of the present invention overcome shortcomings of prior software product maturity systems to evaluate a software product. The invention is derived from four maturity levels of Basic, Established, Differentiated and Leadership, and further derived from seven key focus areas, the key focus areas being Product planning, Technology Tools & Methodology, Product Code & Quality, Release & Configuration Management, Usability, Security & Supply chain, and Intellectual Property Rights.

An objective of the invention is to provide a systematic method and a system to assess maturity level of a software product, wherein the assessment includes providing an exhaustive checklist based on seven key focus areas to derive an optimum maturity level of the software product.

Another objective of the invention is to provide a systematic method and a system for identifying maturity levels and key focus areas to maximize alignment with four competency areas of Process, Architecture, Infrastructure and People.

According to an exemplary embodiment of the present invention, provided is a method to evaluate maturity level of a software product, the method comprising: providing a category weightage to at least one key focus area (KFA) at atleast one maturity level, the weightage being based on its significance at a particular maturity level;
providing by at least one assessor product maturity model ratings based on ratings score calculated for each KFA based on a predefined checklist comprising of at least one question of a questionnaire;
calculating the maturity score of the each KFA based on the ratings score and the category weightage of said at least one KFA; and
for the maturity score for each level determined above a threshold score, aggregating the maturity score to the maturity scores determined for each maturity level below said level to obtain a single product maturity score, wherein at least one of the providing, calculating, and aggregating is performed by a processor.
In another embodiment, the system for evaluating maturity level of a software product at atleast one maturity level, the maturity score being computed in terms of at least one Key focus (KFA) area, at least one competency area, at least one maturity level, and at least one assessment reading, the system comprising:
a memory; and
a processor coupled to the memory configured to execute software instructions to cause following steps:
   providing a category weightage to at least one key focus area (KFA) for at least one maturity level, the weightage being based on its significance at a particular maturity level;
   providing by an assessor product maturity model ratings based on ratings score calculated for each KFA based on a predefined checklist comprising of at least one question of a questionnaire;
calculating the maturity score of that KFA based on the ratings score and category weightage of said at least one KFA; and
for the maturity score for each level determined above a threshold score, aggregating the maturity score to the maturity scores determined for each maturity level below said level to obtain a single product maturity score.

### BRIEF DESCRIPTION OF THE DRAWINGS

The above-mentioned and other features and advantages of the various embodiments of the invention, and the manner of attaining them, will become more apparent and will be better understood by reference to the accompanying drawings, wherein:

FIG. 1 is a schematic view of a software product maturity model depicting four maturity levels, seven key focus areas, and four competency areas..

FIG. 2 shows schematically the steps in applying the evaluation process to a single level of a software product, according to the present invention.

### DETAILED DESCRIPTION

It is to be understood that the invention is not limited in its application to the details of construction and the arrangement of components set forth in the following description or illustrated in the drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

Embodiments of the present invention are described below with reference to flowchart illustrations and/or block diagrams of methods and apparatus (systems). It will be understood that each block of the flowchart illustrations and/or block diagrams, and/or combinations of blocks in the flowchart illustrations and/or block diagrams, can be implemented by computer program instructions. These computer program instructions may be provided to a processor of a general purpose computer, special purpose computer, or other programmable data processing apparatus to produce a "particular" machine, such that the instructions, which execute via the processor of the computer or other programmable data processing apparatus, create "particular" means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer readable memory produce a product including instruction means which implement the function/act specified in the flowchart and/or block diagram block(s). Alternatively, computer program implemented steps or acts may be combined with operator or human implemented steps or acts in order to carry out an embodiment of the invention.

The purpose of the procedure illustrated is to establish the maturity level assessment of a software product and to analyze the level where exactly the software product fits in within the four maturity levels of Basic, Established, Differentiated, and Leadership. These four maturity levels are organized in a hierarchical manner such that the maturity level of a software product increases as the maturity level move from one maturity level to another in ascending order.

The maturity level of the software product is measured primarily with respect to four key competency areas, namely: the processes it follows and complies with, architecture it adopts, interoperability standards, and infrastructure and people perspective.

A preferred embodiment of the present invention is directed to a method and system for measuring maturity levels of a software product by utilizing a multidimensional product maturity model (PMM) that provides suggestive direction or path to achieve product maturity. The holistic model, herein, evaluates the product maturity talking into account various dimensions for product excellence.

The model provides a roadmap for the product team to achieve product excellence in the dimension of process, architecture, infrastructure and people across seven key focus areas vis a vis product planning; technology, tools and methodology; product code and quality; release and configuration management; usability, security and performance; secure engineering and supply chain; and intellectual property rights. The evaluation is goal driven wherein each maturity level has a goal statement that is further evaluated based on a specific goal of each key focus area within that maturity level.

The preferred embodiment of the present invention defines four maturity levels of Basic, Established, Differentiated and Leadership contained within the product maturity model, as :

**Basic Level:** The methodologies, technologies and tools for the development of the product are identified within this level. Project management processes are established to track cost, schedule, and functionality. Architecture centric development process is defined and reference architecture is finalized. Well defined approach for supporting multiple standards, protocol and integrating in a loosely coupled fashion with internal session also gets defined. The group acquires the capability to provide life cycle service (Analysis, Design, Development, Deployment and Support). The organization has significant number of consultants experienced in this technology. Training and certification standards and requirements are documented. Awareness for Product line approach for product development is created; reuse philosophy being adopted by the group. Basic infrastructure for development and hosting is documented.

**Established Level:** The methodologies, technologies and tools for the development of the product are standardized, and integrated into a standard process. All work projects use an approved, tailored version of the standard process for developing and maintaining software. Detailed measures of the software process and product quality are documented and collected. Both the software process and products are quantitatively understood and controlled.

The group here, shows action and commitment to incorporate software product lines in its' strategic plans and future direction. Overall, the group understands the importance of software product lines in achieving its strategic goals. The group aligns their business practices with product line engineering and product line practices gets documented and established. Reviews, management monitoring activities are in place to ensure adherence to project management activities. Reference architecture is in place, deployed, and adherence to reference architecture validated.

Product toll gates are established and product reviews conducted as per toll gates defined. Maturity of the product is ascertained using Product Maturity Model. The group has internalized and established the processes for development and secure engineering.

The group conducts advanced training and defines process for sharing the knowledge within the organization. A process is in place to track changes in the technology and market movements. The manpower quality and quantity is brought aboard and trained as per the standards established. Infrastructure for development and hosting is established.

**Differentiated Level:** Continuous process improvement is enabled by quantitative feedback from the process and from piloting innovative ideas and technologies. The product has industry/functional specific offerings related to the solution addressed by the product, each of them being deployed and considered as a key differentiator. A significant number of "Customer Quotes" is available describing the strength of the group and the value it brings to the customer. The Group practices Product line approach for product development, core assets base being created by the group as part of reuse adoption.

Assets are well documented, reviewed and shared with customer on need basis. The group regularly participates and contributes in Industry / Technical conferences and workshops.

**Leadership Level:** The products are cited in comparisons, reviews by experts and covered in industry magazines regularly. They are rated in international comparison charts and their features set the benchmark for the market. The competitors consider the product line of the organization as a direct threat to their business. The Group exhibits the characteristics of early movers or even pioneers in product development.

Regular invitation to international conferences and workshops as speaker is made. Global alliance with technology vendor (with highest level of partnership agreement) and revenue generation through the alliance is established. Evaluation and high rating is done by established / recognized international agencies. The products have built in proprietary tools that are used as solution accelerator in enhancing cost-benefits to the customers. The group publishes its research and market studies in premier international journals.

The group has specialized training program to institutionalize offerings. The group has research methodology at place for continuous improvement on all fronts. The group partners with alliances in complementing product development. Model to provided hosted infrastructure also gets deployed.

Now, the following detailed description refers to the accompanying drawings which illustrate specific embodiments in accordance to the present the invention. Other embodiments having different structures and operations do not depart from the scope of the present invention.

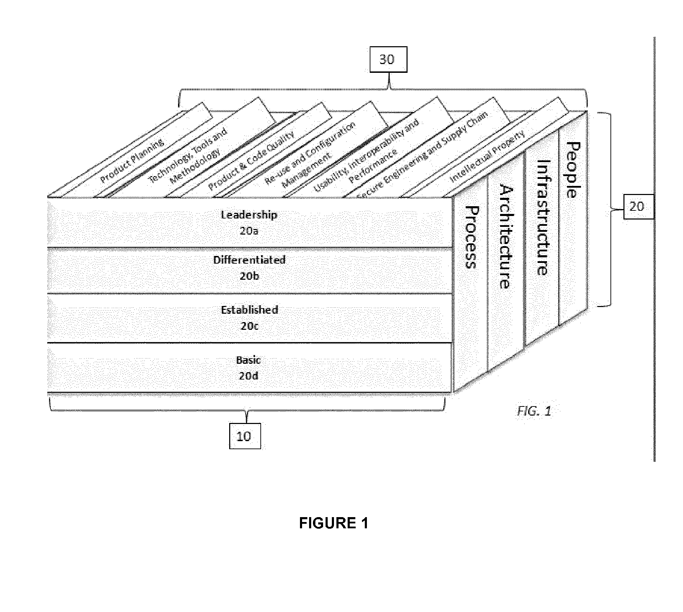

Figure 1 is a block schematic representation of basic product maturity model 100 for measuring product maturity levels (10) as either of Basic (10a), Established (10b), Differentiated (10c) and Leadership (10d) in dimensions of key competency areas (20) namely process (20a), architecture (20b), infrastructure (20c) and people (20d) ; across seven key focus areas (30) namely product planning (30a); technology, tools and methodology (30b); product code and quality (30c); release and configuration management (30d); usability, security and performance (30e); secure engineering and supply chain (30f); and intellectual property rights (30g).
Next, a relational mapping between key competency areas (20) and key focus areas (30) that serves as a basis for measuring product maturity levels is presented in Table 1 below.

**TABLE 1**

| **A) Product Planning (30 a)** | | | | |
|---|---|---|---|---|
| Level | Process (20a) | Architecture (20b) | Infrastructure (20c) | People (20d) |
| Basic (Level 1) | | Architecture related activities planned, architecture vision defined architecture Team available Solution Architecture defined | Infrastructure Planning is in place Infrastructure budget approved" | Training needs has been identified, training plan has been developed for the product team Awareness of Product Line approach has been created |
| Established (Level 2) | Product roadmap defined and reviewed, Product toll gates established , Product planning activities are automated through usage oftools Product using tailored version of the standard processes, Product line approach has been established Both the software process and products have been quantitatively (metrics) understood and controlled Defect analysis conducted | Complete enterprise architecture description done Principles that govern the architecture process, govern the implementation of architecture is in place Architecture blue print defined Architecture review process is in place and practiced No architecture assessment review comments beyond 30 days Reference architecture defined, Enterprise Continuum is being practiced | Infrastructure for development and hosting has been planned | The group conducts advanced training and has defined process for sharing the knowledge within the organization The manpower quality and quantity has been brought aboard and trained as per the standards establish |
| Differentiated (Level 3) | Product reviews happens as per toll gates Continuous process improvement is enabled by quantitative feedback from the process A significant number of "Customer Quotes" is available describing the strength of the group and the value it brings to the customer Core assets base has been created by the group as part of reuse adoption Product is benchmarked in market place | Architecture review of product is established No gap between baseline and target architecture Architecture change management process is in place | Infrastructure benchmarking | The group has specialized training program to institutionalize offerings. The group regularly participates and contributes in Industry /Technical conferences and workshops. The group has research methodology at place for continuous improvementon all fronts. The group partners with alliances in complementing product development |
| Leadership (Level 4) | The products are cited in comparisons, reviews by experts and covered in industry magazines regularly. They are rated in international comparison charts and their features set the benchmark for the market Product is in leadership position in market place The competitors consider the product line of the organization as a direct threat to their business , | Architecture is mature and market leader Product is in magic quadrant of leading analyst report | Leadership in infrastructure | The group published its research and market studies in premier international journals. |

| **B) Technology, Tools and Methodologies (30 b)** | | | | |
|---|---|---|---|---|
| Level | Process (20a) | Architecture (20b) | Infrastructure (20c) | People (20d) |
| Basic (Level 1) | The methodologies, technologies and tools for the development of the product have been identified. Technology feasibility analysis conducted, found to be feasible to build the product with this tools, technology and methodology | Architecture centric development process has been defined Tools for product developments has been defined & documented Technology & Domain standard has been defined and documented | Hardware / Software requirements Communicated to Infrastructure team | Significant number of consultants with experience in the technology |
| Established (Level 2) | The methodologies, technologies and tools for the development of the product has been standardized, and integrated into a standard process A process is in place to track changes in the technology and market movements | Tools, standard alignment with Enterprise level Product developed as per model driven development (MDD/MDI) Tools for product developments has been standardized | High available deployment scenario defined | Competency group is involved in conducting technology related trainings |
| Differentiated (Level 3) | Product group created Common service platforms to store core assets collection and deployments | Ensure changes to architecture are managed in cohesive and architected way Identified tools and standards have wide spread acceptance in industry Tools for product developments has been automated | Product certified for deployment on Multiple hardware and software platform Application require a disaster recovery deployment due to its business criticality to the customer | Training dashboard is maintained and presented to management periodically |
| Leadership (Level 4) | The Group exhibits the characteristics of early movers or even pioneers in product development | Architecture is mature and market leader are solutionbenefits The products have built in tools that used as solution accelerator and enhancing cost-benefits-to the customers | Product supports multi tenancy capabilities | Training materials and processes being automated |

| **C) Product Code and Quality (30 c)** | | | | |
|---|---|---|---|---|
| Level | Process (20a) | Architecture (20b) | Infrastructure (20c) | People (20d) |
| Basic (Level 1) | Coding standard available and is in practice Tools for version management is in place Test cases prepared , ensure test coverage Awareness of Code quality created | Continuous Integration is place | Installation inmanual completed | People are trained in product code quality |
| Established (Level 2) | Code walkthrough(reviews) standardized and practiced Version management tool religiously used Test cases automated Final inspection conducted before every release | CQC (Code Quality Compliance) is 95% (Rule compliance, Total quality, technical depth) Total Quality (Architecture tangle index, design quality, testing quality, code quality) is 90% Technical debt ratio is less than 10% Automated Unit Testing is in practiced | Comply to standard and regulation of the industry | Competency group is involved in conducting technology related trainings |
| Differentiated (Level 3) | Product or components shall meet appropriate quality criteria throughout the life cycle | CQC is 99% Automated Functional testing is in practice Total Quality (Architecture tangle index, design quality, testing quality, code quality) is 95% Technical debt ratio is less than 5% | Level of support for infrastructure | Training dashboard is maintained and presented to management periodically |
| Leadership (Level 4) | Product released consistently with zero defects | Product architecture is market leader Total Quality (Architecture tangle index, design quality, testing quality, code quality) is 99% Technical debt ratio is less than 1% | Infrastructure is market leader | |

| **D) Release and Configuration Management (30 d)** | | | | |
|---|---|---|---|---|
| Level | Process (20a) | Architecture (20b) | Infrastructure (20c) | People (20d) |
| Basic (Level 1) | Release planning of the product is in place Product release life cycle (Gold, Beta,Pre-Beta) defined with version number as per guidelines Configurable Items identified, processes in place to manage CI | Stakeholders informed about code freeze and release Configuration Manager Identified Releasepromotion should be from Dev to Test to Production Code Versioning is maintained for each release | Infrastructure for release is in place | People are trained in release management |
| Established (Level 2) | Toll gate review completed before moving to ST & UAT environment Release and configuration management is automated Management of Post release issues Baselines of identified work products should be established. | Ease at which product moves from to one version another Upgrade path from current version to new version Release management steps are automated & practiced | Infrastructure for release management has been established | Competency group is involved in conducting technology related trainings |
| Differentiated (Level 3) | Release management tools standardized Configuration management tools standardized Changes to work products under configuration management shall be tracked and controlled Product sustainment services offered to customers while the product is generally available | Automation of development to build to release management Automated upgrade from current version to new version | Infrastructure for release management has been institutionalized | People for release management has been institutionalized |
| Leadership (Level 4) | Product features sets benchmarked in the industry | Release process for architecture is market leader | Infrastructure for release management is market leader | People process are in market leader |

| **E) Usability, Interoperability & Performance (30 e)** | | | | |
|---|---|---|---|---|
| Level | Process (20a) | Architecture (20b) | Infrastructure (20c) | People (20d) |
| Basic (Level 1) | Design, development & testing processes are in place to ensure consistency and predictability through the user interface. Basic documentations on interfaces available The performance requirements for the product are captured and workload characterization has been done. The product is developed so as to meet the performance requirements Performance Testing is conducted to make sure that the performance requirements are met Performance testing reports analyzed and recommendations provided | User interface design and development in accordance with user experience heuristics. UI is consistent and predictable Product supports standard protocols | Infrastructure for usability is in place The environment for performance testing needs to be setup and the performance testing tools needs to be installed. | People process for usability is in place Training on Performance testing best practices needs to be conducted and the team develops expertise on performance testing tools. |
| Established (Level 2) | Task flows designed for usability. Uses capabilities like session memory, smart defaults etc. Interoperability standard are in place | UI Design based on requirements of real users. and task Designs flow validation with end users in an iterative manner The product is architected and design with performance requirements in consideration. The product has been sized based on the performance requirements. Coding and database design are also done based on the performance requirements. The response time break up for each of the technology components are available and the product provides performance controls | Infrastructure for usability has been established The dedicated environment for product benchmarking is set up. The performance engineering tools - code profiling and performance monitoring tools are set up. | People for usability has been established The team develops expertise on performance oriented architecture and design |
| Differentiated (Level 3) | User experience fills an existing gap or provides a superior experience compared to peer product. The desirability is indicated by comparing usability of the product with peers as well as accounting for factors like uniqueness, persuasiveness, online branding and differentiators Product performance benchmarked | The performance based design principles and design patterns are incorporated in the development of the product Code Optimization and Database tuning are carried out to improve the performance of the product | Infrastructure for usability has been institutionalized | Infrastructure for usability has been institutionalized The team develops expertise on code optimization and database tuning |
| Leadership (Level 4) | The product creates a consistently positive experience for end users. Has or shows potential of creating a cult following. User loyalty is strong and the product becomes a statement rather than a utility The product is used as a benchmark for Performance standards in the market segment. | User centered design process well integrated with the product development lifecycle. Innovative User Experience 'firsts' set a trend for others to follow Product is used as benchmark for Security Standards in themarket segment Some of the performance design components are patented. The product is capable of adopting to new /futuristic technologies | Infrastructure for usability is market leader | People process are in market leader |

| **F) Secure Engineering & Supply Chain (30 f)** | | | | |
|---|---|---|---|---|
| Level | Process (20a) | Architecture (20b) | Infrastructure (20c) | People (20d) |
| Basic (Level 1) | The product provides role based access to the users Supply chain risk identification, assessment, and prioritization shall be completed The Product has identified Security Requirements & collected as per requirement collection | Product has incorporated security in requirement and architecture | Infrastructure for Secure engineeringis defined Risk based procedure for physical security & access control are in place Infrastructure for System Security & Network security are in place | Background check & NDA are done for employees and contractors Product team is aware and trained in SSA processes & Supply Chain integrity Information Security training are conducted for employees |
| Established (Level 2) | The Product is developed using Secure Coding Practices. Security Testing done & sign-off from Security CoE (Source Code Analysis and VAPT) Supply Chain information systems shall protect confidential data through an appropriate set of security controls A Trusted Technology Provider evaluates supplied components to assure that they meet specified quality and integrity requirements The Product has developed Secure Deployment Guidelines Documented processes for supply chain security are in place and tailored | Threat and risk models are created in the context of the product architecture type and the target deployment environment Run time protection techniques are established | Dedicated infrastructure for Security Testing is in place | Training Secure Engineering & Supply Chain integrity has been performed and records documented (SSA Identifying Security Requirements SSA Secure Design Principles SSA Security Review of Architecture SSA Secure Coding Practice SSA Security Testing SSA Secure Deployment Guidelines) |
| Differentiated (Level 3) | Secure development/engineering methods are specified and refined to best fit the development/engineering characteristics of the target product / domain Secure development techniques integrated into the vendor's development method and inform and guide the test processes. | The Product incorporates Domain Specific Security Requirements. Product comply to Domain Specific Security Standards Secure development/engineering practices and techniques including the guidance and tools which support them, are periodically reviewed and updated as appropriate in light of changes in landscape the threat | Infrastructure is updated as per threat landscape | Training for Secure Engineering & Supply chain has been automated Peoples are certified on Software Security |
| Leadership (Level 4) | Leader in Secure engineering & Supply Chain processes | Leader in Secure engineering & Supply Chainarchitecture | Infrastructure for secure engineering is market leader | People for secure engineering is market leader |

| **G) Intellectual Property (30 g)** | | | | |
|---|---|---|---|---|
| Level | Process (20a) | Architecture (20b) | Infrastructure (20c) | People (20d) |
| Basic (Level 1) | Product team aware about the IPR concepts, already initiated process of identifying IPR components Guidelines for licensing of product is in place | Architecture group work towards innovations | Infrastructure group work towards innovations | Basic training on IPR is in place Awareness of IPR created |
| Established (Level 2) | Product team fully conversant with IPR concepts All components for IPR filing has been identified IPR filing of components has been initiated 30% of the total components developed are patentable Product follows guidelines for licensing religiously | Team has identified architecture components to be patented | Team has identified infrastructure components to be patented | Team has identified infrastructure components to be patented |
| Differentiated (Level 3) | Product team is working keeping innovation in mind 60% of the total components developed of the product are identified as patentable Team has made considerable progress in patent filing, all patentable items are documented in Invention Disclosure form and reviewed from IPR Cell and submitted in Patent office | Team has made considerable progress in patent filing, all patentable items are documented in Invention Disclosure form and reviewed from IPR Cell and submitted in Patent office | Team has made considerable progress in patent filing, all patentable items are documented in Invention Disclosure form and reviewed from IPR Cell and submitted in Patent office | Team has made considerable progress in patent filing, all patentable items are documented in Invention Disclosure form and reviewed from IPR Cell and submitted in Patent office |
| Leadership (Level 4) | Product is considered as market leader in patent filing 80% of the total components developed of the product are identified as patentable | Product is considered as market leader in patent filing architecture point of view | Product is considered as market leader in patent filing infrastructure point of view | Product is considered as market leader in patent filing people point of view |

In another aspect of the present invention, the maturity score of each Key focus area (30) at each level is computed. For the said purpose, software product maturity model 100 includes a computation system that computes the maturity score based on weights assigned to each of the key focus areas and assessment score entered by the assessor further based upon his assessment findings.

The computation system firstly provides weightage to each key focus area at each level depending upon their significance in the corresponding maturity level (10). Referring now to Table 2 below, an example of weights being assigned to each of the key focus areas (30) is illustrated. For example, Product planning (30a) is assigned a score of 8 at the basic level since here the product roadmap is to be defined and clarity that has to be developed on product functionality and positioning is still in a nascent stage, which establishes its utmost significance at Basic level. Similarly, the Intellectual Property (30d) is being assigned a weight of 8 at the leadership level since now the product has emerged as a market leader from the perspective of patent filing.

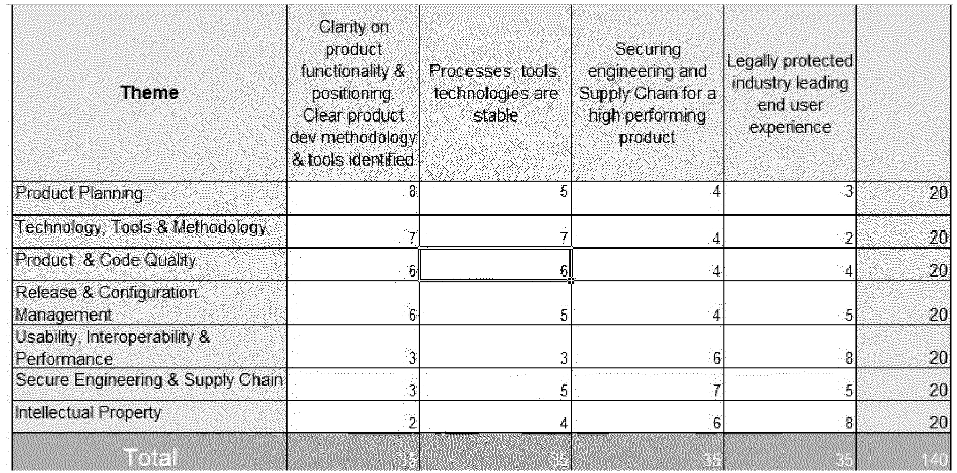

Accordingly maturity score of each particular key factor area at a particular level is calculated based on the score and category weight of key focus area and assessed at what level the software product is with respect to the weightage given and maturity score is computed.

Secondly, the assessor makes his assessment based on two criteria's, i.e. 'Compliance' and 'Non-compliance'. This attribute enhances the accuracy of assessing the software product wherein the software product is assessed for each of the conformance requirements. A comprehensive checklist for all four levels is prepared covering all the four competencies (20) and seven key focus areas (30) to assess for conformance requirements appropriate to the software product that needs to be assessed. The checklist items can be applicable or not-applicable for a specific software product. All applicable checklist items are evaluated to check if the specific software product meets or don't meets the criteria. Any irrelevant conformance requirement for a particular software product is excluded from the checklist, thereby reducing any chance of discrepancy in assessing the software product.

Another attribute of the present invention includes one to 'N' conformance requirement wherein each of the conformance requirement is assessed 4 x 7 x 4 (4 maturity levels, 7 key focus areas, and 4 competency areas) to arrive at a conclusion on the maturity level of the software product.

The software product computation involves reviewing the product and documentations by the assessor prior to the assessment. The assessment is based on the checklist that includes a set of questionnaires and is analyzed based on whether the software product is compliant with the set of requirements. The set of questions are gauged by collecting data that supports each of the conformance requirements applicable for assessment of the software product.

To conduct the assessment based on the checklist, the assessor needs to provide ratings based on each question. In order to achieve a particular level, any software product is required to meet all the checklist criteria of that particular level as well as of all the levels below it.

The maturity scores are then computed for each key focus area and aggregated to identify the maturity level of the software product. In order to move from a lower maturity level to a higher maturity level in a hierarchy, all the requirements listed in the lower maturity levels should be met. The threshold score is determined for each level, and only if the score observed at each level is found above the threshold for that level, they get aggregated to obtain a final maturity score. For example, if the score at established level is found lower than the threshold decided for this level, the aggregated score will include scores only of the basic maturity level.

Those skilled in the art will recognize that the basic objectives achieved by the present invention need not have attributes as described above having fixed number of maturity levels, fixed number of key focus areas, and fixed number of key competency areas, and may vary based on the evaluation needs and the type of software product that is to be evaluated.

Reference will now be made in detail to the exemplary embodiment(s) of the present invention, as illustrated in the accompanying drawings. Whenever possible, the same reference numerals will be used throughout the drawings to refer to the same or like parts.

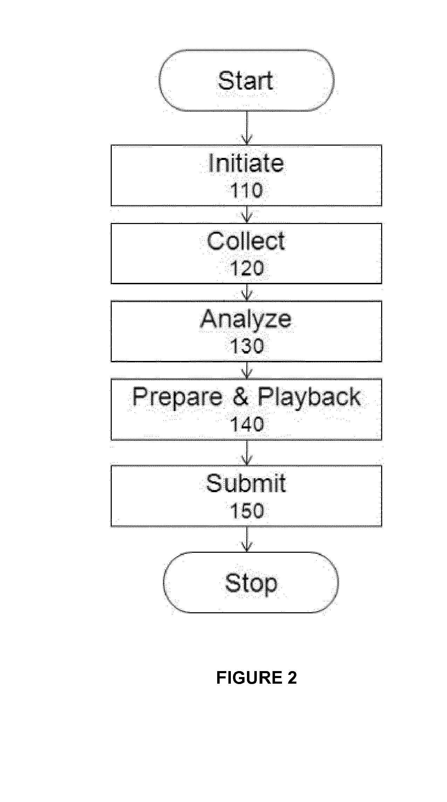

Turning to Figure 2, a flow diagram 100 depicting the process of assessing a software product is illustrated. The assessment process includes five stages, the five stages being Initiate stage 110, Collect stage 120, Analyze stage 130, Prepare & Playback stage 140, and Submit stage 150, and the duration for the assessment process to conclude is approximately 5 weeks from the start date. At the initiate stage 110, the process includes initiating management approvals, forming assessment team, preparing processes, and sharing initial documents. At the collection stage 120, the process includes collecting business drivers, conducting product demos, collecting architecture, documentation and assessing the product maturity model. At the Analyzing stage 130, the four key competency areas of Process, Architecture, Infrastructure, and People are analyzed. At the Prepare & Playback stage 140, the summarizing of the analysis obtained, preparing draft assessment reports are worked upon. The submit stage 150 includes preparing and submitting the final assessment report and based on the evaluation recommending for further improvements.

As an example, at Basic level 20a, for a key focus area, say, product planning, the checklist comprising questions on a competency area, say, process, may be:

Is the product feasible to develop from functional point of view?

Is the product estimated at different stages of lifecycle using function points and reviewed?

Is the pricing model and pricing in line with market expectation?

At Leadership level 10d for the same key focus area i.e. Product planning, the checklist on a process perspective could comprise questions such as:

Is the product performing as #1 product in the market?

Has the product occupied leadership position in market place?

For key focus area Usability, **Interoperability** & Performance, at a Differentiated level 10c, the checklist based on architecture, the questionnaire could be:

Has the product been sized based on the performance requirements?

Does code optimization and Database tuning carried out to improve the performance of the product?

For the same key focus area i.e. Usability, Interoperability & Performance, but at a Leadership level 10d, the checklist based on same dimension i.e. architecture, the questionnaire could be:

Does user center designed process integrate with the product development lifecycle?

Is the product capable of adopting to new / futuristic technologies?

The answers for all the questionnaires are marked as either 'Compliance' or 'Non- compliance' based on whether the software product is compliant or non-compliant to that specific conformance requirement.

Based upon above exemplary questions if it is ascertained that all the compliance items are met, it would be defined 'Compliant' and further based on the weightage, if it is concluded that the software product meets the criteria of the Basic level 10a, the assessment will then be proceeded to the next level i.e. Established level 10b and thereon till Leadership level 10d. However, if the software product has not been fully institutionalized based on the outcome of the assessment, assessment for the next maturity levels would not be performed and remedial measures would be taken to ensure the software product meets the criteria of Basic level 10a.

The checklist prepared at each maturity level for each key factor area is based on the four competency areas of Process, Architecture, Infrastructure, and People. For each of the conformance requirement, at each stage it is assessed if the checklist needs to be edited by either deleting or adding few questions based on the software product that needs to be assessed. The checklist includes all the questions that are required to be assessed and marked as 'applicable'. The questions that need not have to be assessed are marked as 'Not Applicable' and hence will not be assessed for the software product. Next, as discussed above, the assessment on whether the software product meets the checklist criteria is assessed. If the software product meets the criteria, the same would be marked as Conformance criteria met' and would be further assessed on other checklist questionnaires to check the criteria assessment. Once the entire checklist is assessed, weightage would be provided based on the maturity level, the key focus area, and the competency area. If the software product does not meet the criteria, the same would be marked as 'Conformance criteria not met'. The result of the assessment is then summarized and a set of recommendations are made for the software product, if the software product does not fulfill the three maturity levels of Basic, Established, and Differentiated levels. For example, if a software product does not meet the Differentiated level of maturity, a certain set of recommendations would be made based on identifying the conformance requirements that were not compliant and accordingly suggestions would be provided on overcoming those conformance requirements.

Example embodiments of the process and components of the current subject matter have been described herein. As noted, these example embodiments have been described for illustrative purposes only, and are not limiting. Other embodiments are possible and are covered by the invention. Such embodiments will be apparent to persons skilled in the relevant art(s) based on the teachings contained herein. Thus, the breadth and scope of the current subject matter should not be limited by any of the above-described exemplary embodiments, but should be defined in accordance with the following claims and their equivalents.

## Claims

1. A method for evaluating maturity level of a software product at atleast one maturity level in dimensions of at least one Key focus (KFA) area, at least one competency area, at least one maturity level, the method comprising:
providing a category weightage to at least one key focus area (KFA) for at least one maturity level, the weightage being based on its significance at a particular maturity level;
providing by at least one assessor product maturity model ratings based on ratings score calculated for each KFA based on a predefined checklist comprising of at least one question of a questionnaire;
calculating the maturity score of the each KFA based on the ratings score and the category weightage of said at least one KFA; and
for the maturity score for each level determined above a threshold score, aggregating the maturity score to the maturity scores determined for each maturity level below said level to obtain a single product maturity score, wherein at least one of the providing, calculating, and aggregating is performed by a processor.

2. The method as claimed in claim 1, wherein the competency area is selected from a group consisting of process, architecture, infrastructure and people.

3. The method as claimed in claim 1, wherein the key focus area is selected from a group consisting of Product Planning, Technology, Tools & Methodology, Product Code & Quality, Release & Configuration Management, Usability, Security & performance, Secure Engineering & Supply Chain, Intellectual Property Rights (IPR).

4. The method as claimed in claim 1, wherein the maturity level is selected from a group consisting of basic level, established level, differentiated level, and leadership level.

5. The method as claimed in claim 1, wherein checklist items are ascertained to determine their applicability for the software product.

6. The method as claimed in claim 1, wherein the assessor provides the rating score based on options of "compliance" and "non compliance" of the product to corresponding question in the checklist.

7. The method as claimed in claim 1, wherein the checklist is provided for all four levels covering all the four competences and seven KFA of software product maturity model (SPMM).

8. The method as claimed in claim 1, wherein in order to achieve a particular maturity level, the product is required to meet all the checklist criteria of that particular maturity level as well as of all the levels below it.

9. A system for evaluating maturity level of a software product at least one maturity level, the maturity score being computed in terms of at least one Key focus (KFA) area, at least one competency area, at least one maturity level, and at least one assessment reading, the system comprising:
a memory; and
a processor coupled to the memory configured to execute software instructions to cause following steps:
providing a category weightage to at least one key focus area (KFA) for at least one maturity level, the weightage being based on its significance at a particular maturity level;
providing by an assessor product maturity model ratings based on ratings score calculated for each KFA based on a predefined checklist comprising of at least one question of a questionnaire;
calculating the maturity score of that KFA based on the ratings score and category weightage of said at least one KFA; and
for the maturity score for each level determined above a threshold score, aggregating the maturity score to the maturity scores determined for each maturity level below said level to obtain a single product maturity score.

10. The system as claimed in claim 9, wherein the competency area is selected from a group consisting of process, architecture, infrastructure and people.

11. The system as claimed in claim 9, wherein the key focus area is selected from a group consisting of Product Planning, Technology, Tools & Methodology, Product Code & Quality, Release & Configuration Management, Usability, Security & performance, Secure Engineering & Supply Chain, Intellectual Property Rights (IPR).

12. The system as claimed in claim 9, wherein the maturity level is selected from a group consisting of basic level, established level, differentiated level, and leadership level.

13. The system as claimed in claim 9, wherein a checklist is provided for all four levels covering all the four competences and seven KFA of software product maturity model (SPMM).

14. The system as claimed in claim 9, wherein checklist items are ascertained to determine their applicability for the product, wherein the assessor provides the rating score based on options of "compliance" and "non compliance" of the product to corresponding question in the checklist.

15. The system as claimed in claim 9, wherein in order to achieve a particular level, the product is required to meet all the checklist criteria of that particular level as well as of all the levels below it.
